# EUROPEAN PATENT SPECIFICATION

(11) **EP 1 401 240 B1**
(45) Date of publication and mention of the grant of the patent: **23.03.2011**
(21) Application number: 02020319.6
(22) Date of filing: 11.09.2002
(51) Int. Cl.: H04R 25/00

(54) **A dual directional mode mobile terminal and a method for manufacturing of the same**
Mobilesendgerät mit Bidirektioneler Betriebsart und Verfahren für dessen Herstellung
Terminal mobile ayant un mode bidirectionnel et procédé pour sa fabrication

(43) Date of publication of application: 24.03.2004
(73) Proprietor: Hewlett-Packard Development Company, L.P., Houston, TX 77707 (US)
(72) Inventor: Jensen, Rene Eske, 9310 Vodskov (DK)
(74) Representative: W.P. Thompson & Co.

(56) References cited:
- EP-A- 0 984 666
- WO-A-01/69964
- DE-C- 10 050 559
- US-A- 4 142 072

## Description

### Field of the invention

The invention relates generally to enhancing speech quality in a telecommunications system, and, more specifically, to enhancing directional properties of a microphone in a mobile terminal.

### Background of the invention

The mobile device boom of the recent years has resulted in different new uses for the mobile terminals widely used in telecommunications. The users expect their new devices to be usable in many different situations. The expectations regarding to the acoustical quality of the device are high, and because the device may be used for various purposes, this sets very high requirements for the design of the terminals.

As an example of the dual use of the mobile handset, it is very common that the terminal, in addition to its normal use as a handset, is used as a hands-free device. This may be the case when the user is willing to use the mobile terminal in a vehicle, for example, or use it for conference calling. Typically, in the latter case, the mobile terminal is set on a table, the persons willing to speak then usually grouping around the terminal.

From the acoustical design point of view, the latter kind of use requires quite different acoustical and directional properties of the microphone than the first use mentioned. In conference calling, it is very critical that the microphone shows omni-directional characteristics so that the position of the person speaking does not influence too radically on the sound quality, and when one person is speaking, also comments from the background should be carefully detected.

On the other hand, when a mobile terminal is used as a handset, it is preferable that the background noise is not detected by the microphone. Normally, the mouth and other sound producing organs of the mobile user are within a predetermined distance from the microphone when he or she is speaking to his or her mobile handset. If human anatomy factors are taken into account, it is easier to design a phone in such a way that the mouth of an average male/female user is quite close to the centre of inlet of the microphone. Thus the microphone should preferably show unidirectional characteristics in order to receive the speech of the user but not noise from his or her background.

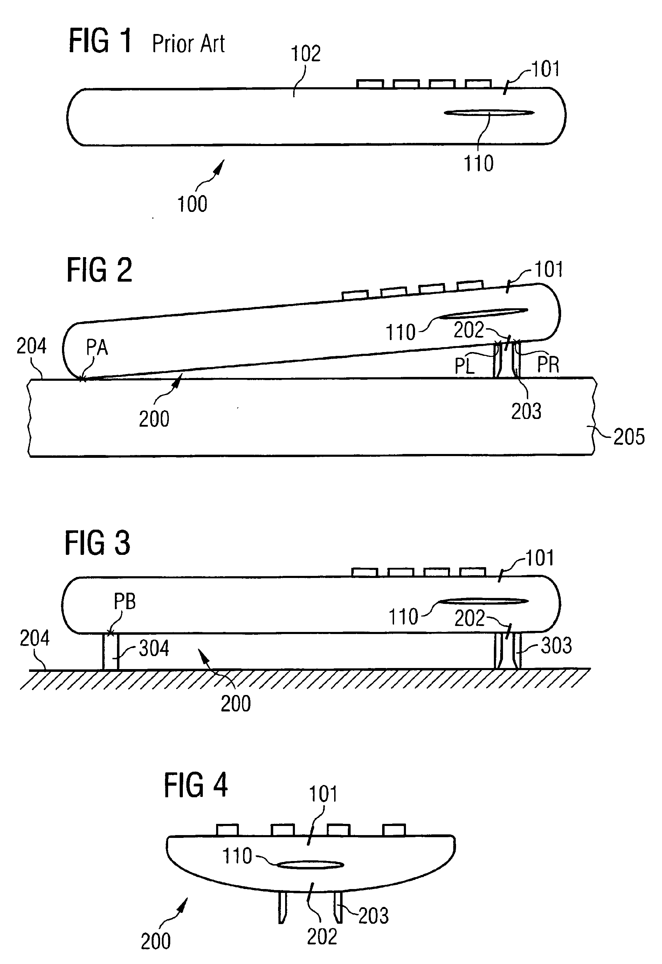

Figure 1 illustrates a prior art mobile terminal 100. The terminal 100 includes housing 102, wherein a microphone 110 is assembled. For the microphone 110 an aperture 101 is important so that the energy of acoustic signals is not attenuated too much which would be the case if the acoustic signals had to traverse through the housing 102.

Having both omni- and unidirectional characteristics in the acoustical parts of one mobile terminal is not a straightforward task. Some prior art solutions that might be applicable to at least some extent can be found, but they present drawbacks which both an ordinary user and an acoustics designer would find annoying.

International patent publication WO 01/69967 A2 shows one example of implementing a selectivity switch between a directional mode and an omni-directional mode in a hearing aid device. The switch includes a switch body having a port aperture therein in communication with one of the ports of the microphone, and a switch actuator moveably connected to the switch body and moveable to a first position wherein the port aperture is generally unobstructed by the actuator and a second position wherein the actuator covers the port aperture.

In the modern mobile lifestyle, a mobile terminal sometimes presents some values of the user of the terminal. Thus, the aesthetic design is very important, and the switch does not support the purpose of creating an aesthetically enjoyable device. Secondly, the shape and form of a hearing aid device is quite different to a mobile phone, basically because the hearing aid device is located in the ear of the user, so the mechanics of the device can be designed in a completely different manner. Therefore the '967 solution cannot be without problems used for ordinary mobile terminals.

Another solution from U.S. patent 5,933,510, despite of its many advantages, fits only poorly for the acoustical design of a mobile terminal. In '510, a microphone housing includes apertures and a switch; the user may select with the switch, whether or not he or she is willing to use the microphone in omni- or unidirectional mode. Firstly, it is difficult to make the switch and sealing elements to comply with the decorative design desired for the terminal. Secondly, the design of a rotating sleeve for the microphone housing in the manner described in '510 is also extremely challenging.

DE10050559 relates to a mobile telephone accessory which has a chamber fitted to the mobile telephone in the vicinity of the microphone, provided with a pivoted cover having a speaking opening coupled to the microphone via a sound wave transmission channel incorporated in the cover and the chamber.

It is an object of the invention to bring about a mobile terminal equipped with a sound receiving system having selectable directional characteristics.

### Summary of the invention

This and other objectives of the invention are accomplished in accordance with the principles of the present invention by providing in accordance with any one of the independent patent claims.

A dual directional mode mobile terminal includes a microphone having been assembled in a housing. The housing includes a first and a second aperture, of which the first aperture is on the user side when the terminal is used as a handset, the first and second apertures forming acoustical conduits to both sides of the microphone. The housing further includes sealing means for sealing the second aperture together with an external surface, when the mobile terminal is placed on said surface, thereby enabling in the mobile terminal an acoustical omni-directional characteristic.

A method for manufacturing a dual directional mode mobile terminal, includes the steps of i) assembling a microphone into a housing, wherein the housing includes at least a first and a second apertures, of which the first aperture is designed to be on the user side when the terminal is used as a handset, the first and second apertures thus forming acoustical conduits to both sides of the microphone, and ii) assembling the housing with sealing means for sealing at least one of the apertures together with an external surface, when the mobile terminal is placed on said surface, thereby enabling in the mobile terminal an acoustical omni-directional characteristic.

### Brief Description of the Drawings

In the following, the invention and its preferred embodiments are described more closely referring to the examples shown in Figure 2-11 in the appended drawings, wherein:
- Figure 1: shows a conventional microphone arrangement in a mobile terminal,
- Figure 2: shows a dual-mode mobile terminal according to one aspect of the invention,
- Figure 3: illustrates one embodiment of the present invention where acoustic sealing is enhanced by a second support member,
- Figure 4: depicts the traverse design aspects in accordance with the invention,
- Figure 5: further illustrates one embodiment of the invention,
- Figure 6: illustrates a cut of a sealing member 203 from Figure 2,
- Figure 7: illustrates the sealing member 203 seen from above,
- Figure 8: shows the second acoustical mode closer,
- Figure 9A and 9B: show how the directivity mode of the mobile terminal is changed according to one aspect of the present invention,
- Figure 10: shows a first measurement result of the mobile terminal in the first directional mode, and
- Figure 11: shows a second measurement result of the mobile terminal in the second directional mode.

Same reference numbers denote similar elements throughout the figures.

### Detailed description of the invention

Figure 2 illustrates one embodiment of the present invention. The mobile terminal has a housing 200, and, as shown in Figure 1 described above, there is also an aperture 101 provided for the speech. The aperture 101 leads sound waves to a microphone 110 that is assembled inside the housing 200. In the housing 200 there is also a second aperture 202. The second aperture 202 is preferably located on the opposite side of the housing 200 so that the apertures 101 and 202 provide acoustic conduits leading to both sides of the microphone.

For sake of clarity, there are three points marked in the housing. PL and PR are the points where sealing means 203 are attached to the housing 200, and the point PA illustrates the point of the housing that supports the lower end of the housing against a flat surface 204 when the mobile terminal is tilted on said sealing means 203. The sealing means 203 are not drawn to scale; according to one aspect of the present invention their height is some millimetres. Depending on the aesthetic goals of the designer, sealing means 203 that are higher or lower can be used.

According to one embodiment of the present invention the mobile terminal can be placed on a table 205, for example, or other flat surface 204, so that the sealing means 203 together with the flat surface 204 seal the second aperture 202. The sealing of the second aperture 202 has the effect that the mobile terminal is in omni-directional mode where the microphone 110 receives voice signals mostly through the aperture 101 thus losing some of its directional sensitivity.

Normally, the microphone 110 is directionally sensitive when both apertures 101 and 202 are open. When both apertures 101, 102 are open, the sound waves coming from the background noise can be understood to cancel each other, i.e. the microphone shows unidirectional characteristics and is well suitable for to be used as a handset of a mobile terminal.
The uni- and omni-directional characteristics of the microphone 110 are herewith referred with the term acoustical modes of the microphone.

Figure 3 shows another example of implementing the present invention. Instead of only having sealing means 303 such as a sealing member, the mobile terminal now also has a support member 304. In addition, the marked point PB illustrates the effective support point of the support member 304 that is comparable to point PA with reference to Figure 2.

One function of the support member 304 is to increase the pressure between the sealing means 303 and the flat surface 204. The sealing means 303 are located close to the second aperture 202 which is further located at the spot of the microphone. As the mobile terminal of Figure 2, the mobile terminal can as well be placed on a flat surface 204 thus giving omni-directional characteristics for the mobile terminal. The position PB which is also the position of the second support member 304 may be located based on the weight distribution of the mobile terminal. To the weight distribution influences the weight of the contents of the mobile terminal, i.e. the battery, different electrical parts, the display, and so forth. The PB can be positioned so that the torque caused by the weight of the mobile terminal causes a stronger or greater force on the sealing means 303 and so enhances the sealing made by the sealing means 303 and the flat surface 204. If the sealing means 303 are made of a soft material showing high elastic properties, a good sealing can be provided.

Figure 4 depicts a cross sectional cut of a mobile terminal. The terminal has a microphone 110 which is positioned inside the housing 200. In the housing 200 there are apertures 101 and 202. The apertures 101, 202 act as inlet holes which form acoustical conduits to both sides of the microphone 110. It is to be noted that the apertures 101, 202 need not to be on opposite sides of the mobile terminal; the only limiting condition is that the acoustical conduits lead to both sides of the microphone. Further, there are support and sealing means 203 at the bottom side of the housing. The design of the sealing means 203 may involve taking into account the curvature of the housing 200. In some mobile terminal models, the housing 200 is strongly curved and, therefore, it is impossible to provide a good enough sealing with sealing means 203 that do not take into account the shape of the bottom of the housing 200.

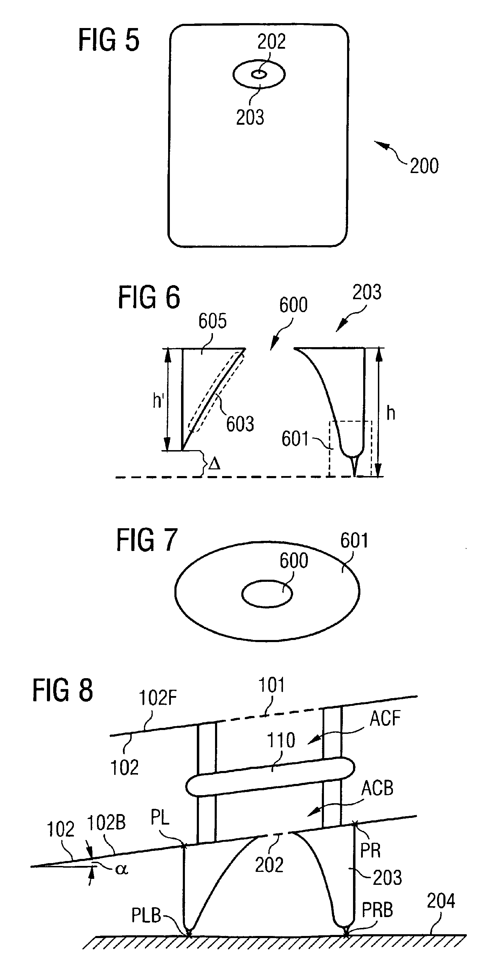

Further, Figure 5 illustrates the mobile terminal viewed from below. In the sealing means 203 that is upper part of the mobile terminal housing 200 the aperture 202 and the sealing means 203 are shown.

Figure 6 illustrates closer the sealing means 203. First, the sealing means 203 have a hole 600 for the acoustical inlet. The contact part 601 of the sealing means 203 has been only marked with a box on the right-hand side, but it preferably extends through the sealing means 203. For example, if the sealing means 203 have the form of a ring like in Figure 5, the part 601 extends around the bottom of the ring.

Further, aperture part 603 has similarly been marked with a box. The acoustical signals coming from outside the mobile phone in order to reach the inlet hole 600 and to further proceed into the microphone 110 traverse beyond this part. In its design one must take into account the acoustical considerations: Special curvature may be needed in order to provide a proper distortion free acoustical transmission characteristics.

The sealing means 203 are connected to the mobile terminal using the aperture part 605 of the sealing means 203. On the left-hand side the height of the sealing means 203 is denoted with *h'* and on the right-hand side with *h*. The difference (*h'*- *h*) between h' and h is denoted with Δ. If the microphone is located as usually at the bottom part of the mobile terminal and if the tilting of the housing because of the height difference of the sealing means and the bottom part of the housing is like in Figure 2, *h* is larger than *h'*. The tilting may therefore depend on the distance between PA and PL, and partially as well on the distance between PL and PR. In the case of a mobile terminal with a support element like in Figure 3 there is no need for this kind of asymmetry and *h'* can equal *h*. The size of Δ may be adapted to make the sealing proper taking into account the tilting angle of the between the bottom part of the housing and the surface where the mobile terminal is lying.

Another possibility to achieve an asymmetric elastic behaviour is to use elastic materials asymmetrically, i.e. a more elastic material on the *h'* side and a stiffer material on the opposite side. This can in principle be achieved with e.g. block copolymers where the ratios of different polymer materials exhibit small changes along the bottom part of the sealing means. In this way it is also possible to ensure a good enough sealing. Another option, for example, is to use some other material that has spatially non uniform elasticity constant.

Figure 7 shows the sealing means from bottom. 600 is the inlet and 601 is the contact part. The profile of the aperture part 603 with its curvature is not visible in the figure.

Figure 8 presents the mobile terminal when the second acoustical directivity mode is activated. The mobile terminal 102 is placed on a flat surface 204. In the figure only the portion of the mobile terminal which illustrates the housing means and their vicinity is shown. The sealing means 203 have a contact with the flat surface 204 at aperture points PLB and PRB. Preferably, the sealing means extend from the housing of the mobile phone in such a way that in the figure left-hand side contact point PL acts as the outermost aperture point for the sealing means at part PLB and, respectively, the point PR at as the contact point of the sealing means for the point PRB.

The housing 200 is usually constructed from two parts; 102F is the front part and 102B is the back part. Between the front and back part 102F, 102B of the housing 200 there is a microphone 110. In the front part 102F at the spot of the microphone 110 there is at least one opening for the aperture 101 and on the back side part of the housing there is correspondingly at least one aperture 202 leading to the bottom side of the microphone.

Between the housing and the microphone there is sealing on both sides of the microphone 110. Preferably, the sealing is obtained with the help of an elastic gasket, such as a sealing ring. The first purpose of the sealing is to enable the propagation of sound from the exterior of the housing to the microphone, disabling propagation of the sound inside the housing, whereas the second purpose is to reduce the distortions caused by the loudspeaker of the mobile terminal.

Below the microphone 110 there is a resonance cavity ACB which is consists of smaller cavities formed by i) space limited by the microphone 110, possible sealing between the microphone, and bottom part 102 of the housing 200, and ii) acoustically well conductive part of the housing 200 including at least one aperture 202, sealing means 203, and the flat surface S. Respectively, another resonance cavity ACF is formed in between the microphone and the front part of the housing.

As already discussed with reference to Figures 2 and 6, the mobile phone may be tilted. To serve this purpose the sealing means are designed in the manner described with reference to Figure 6, the distance between PL and PLB may be shorter than the distance between PR and PRB. This means that the PL, PLB part could be more elastic than the PR and PRB so that the PL, PLB part of the sealing means compresses more. The aperture between the flat surface 204 and the sealing means 203 shall be preferably good in order to enhance the omni-directional mode. It is possible that if the sealing is not proper the direction and sensitivity of microphone is reduced to correspond the unidirectional microphone.

The tilting angle α corresponds to the tilting of the mobile terminal with respect to the flat surface 204. In practice, it may get almost any target value, the target value being thus between a very small angle and a substantially large angle. The magnitude of α has an impact on the aesthetic design of the mobile terminal, and, secondly, it may influence on the contact force between the contact part 601 and the flat surface 204 thus leading to further elasticity considerations. The more the mobile terminal is tilted, the smaller the contact force in the support means is, so requiring more elastic material.

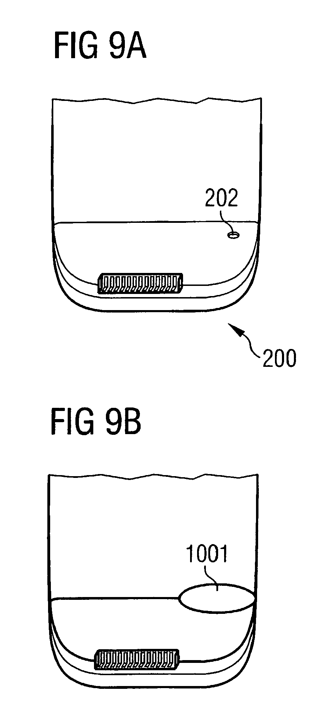

Figure 9A illustrates another way to realise the invention. The mobile terminal has a housing 200 which includes a battery cover. The battery cover may be removable; usually the mobile terminal battery is stored under the cover. For some manufacturers the cover and the battery are combined to a single element. The aperture 202 is marked with a dot in the figure. When the inlet hole is open the mobile phone is in unidirectional directivity mode.

Figure 9B shows the aperture 202 covered with removable sealing means 1001 according to one aspect of the present invention.

The removable sealing means 1001 can be stored under the battery cover or back cover, Preferably, the aperture 202 and the sealing means 1001 are designed in such a way that the sealing means are tightly matched with the aperture 202. This may be realised, for example, by supplying the sealing means with attaching means and sealing means, so that the sealing means 1001 correspond partially to a flat surface 204. As shown in Figure 8, this mode of the invention is particularly usable when the table 205 or other surface is not essentially flat so that it would not provide a uniform enough flat surface 204 for the sealing means 203 to match at points PLB and PRB shown in Figure 8. Further, the external surface can be used for causing this kind of extra pressure for pushing the sealing means 203 stronger against the housing 200 of the mobile terminal, because the sealing means 1001 would not necessarily be able to cause the sealing to be tight enough hence the weight of the mobile terminal can be used for this purpose to increase the sealing.

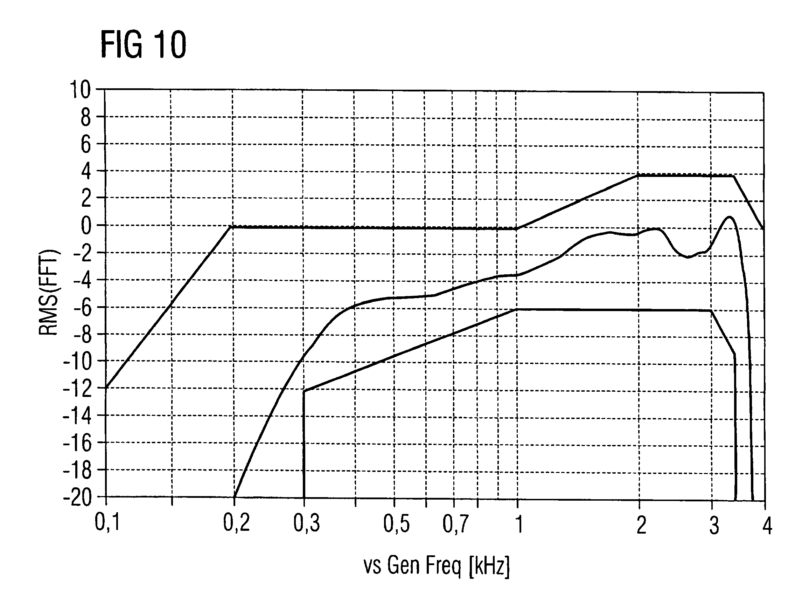

Figure 10 illustrates a measurement result of the spectral energy density versus the frequency of a signal output at a reference point close to the telephone. The measurement has been performed for the inventive mobile phone assembly in unidirectional mode, and in Loudness Rating Guarding Position LRGP in accordance with the standard 3G TS 26.132 (TSG SA; Codec Working Group; Terminal Acoustic Characteristics for Telephony).

The energy spectrum measured is presented as observed by the codec of the mobile terminal. The upper piecewise linear curve corresponds to the maximal allowed spectral density values, whereas the lower piecewise linear curve illustrates the minimum acceptable spectral energies. As can be seen from the measurement results, the observed spectra lies clearly between the allowed values.

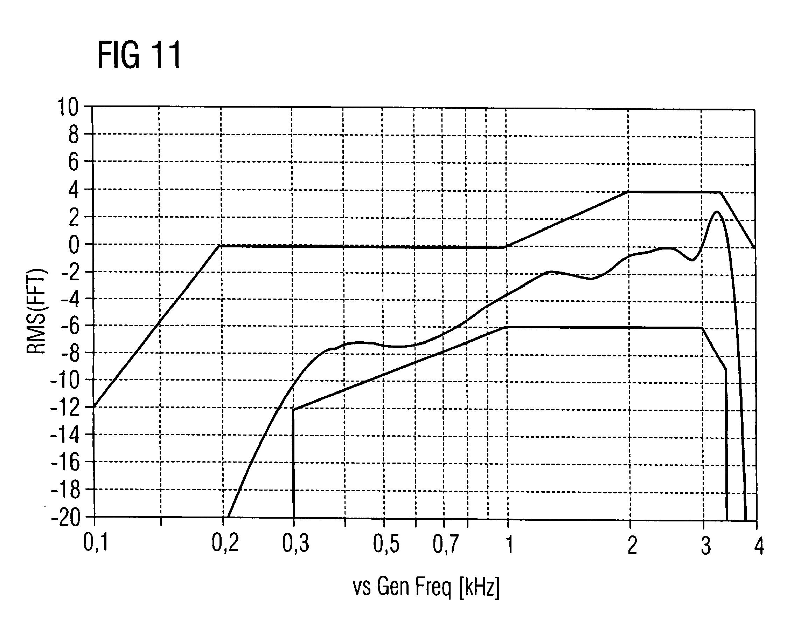

Figure 11 shows the acoustic behaviour of the same mobile terminal when it is in the second acoustical directivity mode. The spectral energy density shows again that the values are allowed, i.e. that the spectra lies clearly between the agreed limits.

Both measurements were conducted with a the mobile terminal lying head up on the table, positioned 50 cm from the reference mouth and with 30° azimuth. For the measurements the mobile terminal input gain was not adjusted, though this is not visible in the figure. In practice, because of the different resonance cavities caused by the differences in the acoustical apertures when the mobile terminal is in different acoustical modes, the gain must be adjusted between the modes. The adjustment may be done automatically by detecting the measured signal strength in the codec.

To summarise, according to one aspect of the present invention, the mobile phone can be made to show dual mode characteristics. First, a microphone is assembled into a housing that includes at least two inlet holes. At least one of the apertures is designed to be on the user side when the terminal is used as a handset, and the apertures together form acoustical conduits to the both sides of the microphone. The housing is further assembled to include sealing means; with the sealing means at least one of the inlet holes may be sealed together with an external surface, such as a table or any other flat surface. When the mobile terminal is placed on said flat surface, one acoustical aperture is thus closed and the mobile terminal shows acoustical omni-directional characteristics as a second acoustical directivity mode.

According to one further aspect of the present invention, the assembling step may include the assembling of an elastic gasket. Preferably, said elastic gasket is asymmetric, and the height of the lower part of the gasket being smaller than the height of the higher part of the gasket, the difference being adapted to make the sealing proper taking into account the elevation angle between the bottom of housing and the surface.

According to still another aspect of the present invention, in addition to the sealing means, the housing may further include a support member to increase the pressure between the sealing means and the surface.

Although the invention was described above with reference to the examples shown in the appended drawings, it is obvious that the invention is not limited to these. For example, instead of a microphone, any other transducer or sound detector may be used in connection with the embodiments of the inventive sealing mechanism.

### Reference numbers used in the description:

- 100: mobile terminal
- 101: aperture
- 102: housing
- 110: microphone
- 200: housing
- 202: second aperture
- 203: sealing means
- 204: flat surface
- 205: table
- 303: sealing means
- 304: support member
- 600: hole for the acoustic inlet
- 601: contact part
- 603: aperture part
- 1001: removable sealing means

## Claims

1. A dual directional mode mobile terminal including a microphone (110), said microphone (110) having been assembled in a housing (200) of said mobile terminal,
**characterised in that**
- the housing (200) includes at least a first and a second aperture (101, 202), of which the first aperture (101) is on the user side when the terminal is used as a handset, the first and second apertures (101, 202) forming acoustical conduits (ACF, ACB) to both sides of the microphone (110); and
- the housing (200) further includes sealing means (203, 303, 1001) for sealing the second aperture (202) together with an external surface (204), when the mobile terminal is placed on said surface, thereby enabling in the mobile terminal an acoustical omni-directional characteristic.

2. A mobile terminal according to claim 1,
**characterised in that**
the sealing means (203) include an elastic gasket.

3. A mobile terminal according to claim 2,
**characterised in that**
the elastic gasket is asymmetric, a height h' of a first part of the gasket being smaller than a height h of a second part of the gasket, the difference Δ = h' - h being configured to seal between a backside surface (102B) of the housing (200) and the external surface (204) taking into account an elevation angle (α).

4. A mobile terminal according to claim 1,
**characterised in that**
in addition to the sealing means (303), the housing (200) further includes a support member (304) to increase the pressure between the sealing means (303) and the external surface (204).

5. A mobile terminal according to claim I,
**characterised in that**
the sealing means (1001) further including an attachment means for attaching the sealing means to the inlet hole (202) in an acoustically proper way.

6. A mobile terminal according to claim 5,
**characterised in that**
the mobile terminal has means (200) for storing the sealing means (1001).

7. A method for manufacturing a dual directional mode mobile terminal, the method
**characterised in that**
it includes the steps of:
- assembling a microphone (110) into a housing (200) of said mobile terminal, wherein the housing (200) includes at least first and second apertures (101, 202), of which a first aperture (101) is designed to be on the user side when the terminal is used as a handset, the first and second apertures thus forming acoustical conduits to both sides of the microphone (110); and
- assembling the housing (200) with sealing means (203) for sealing the second aperture (202) holes together with an external surface(204), when the mobile terminal is placed on said external surface (204), thereby enabling in the mobile terminal an acoustical omni-directional characteristic.

8. A method according to claim 7,
**characterised in that**
the assembling step includes the assembling of an elastic gasket.

9. A method according to claim 8,
**characterised in that**
said elastic gasket is asymmetric, a height h' of a first part of the gasket being smaller than a height h of the second part of the gasket, the difference Δ = h' - h being configured to seal between the bottom (102B) of housing and the external surface (204) taking into account the elevation angle (α).

10. A method according to claim 7,
**characterised in that**
in addition to the sealing means (303), the housing further includes a support member (304) to increase the pressure between the sealing means (303) and the external surface (204).

11. A method according to claim 7,
**wherein** the sealing means (1001) further includes an attachment means for attaching to the inlet hole (202) in an acoustically proper way.

12. A method according to claim 11,
**wherein** the sealing means (1001) are stored in the mobile phone, and when used, placed into the aperture (202).

## Patentansprüche

1. Mobiles Endgerät mit Zweirichtungsmodus, umfassend ein Mikrofon (110), wobei das genannte Mikrofon (110) in einem Gehäuse (200) des genannten mobilen Endgeräts montiert wurde,
**dadurch gekennzeichnet, dass**
- das Gehäuse (200) mindestens eine erste und eine zweite Öffnung (101, 202) umfasst, von denen sich die erste Öffnung (101) auf der Benutzerseite befindet, wenn das Endgerät als Handapparat benutzt wird, wobei die erste und die zweite Öffnung (101, 202) akustische Leitungen (ACF, ACB) zu beiden Seiten des Mikrofons (110) bilden; und
- das Gehäuse (200) weiter Dichtungsmittel (203, 303, 1001) umfasst, um die zweite Öffnung (202) zusammen mit einer externen Oberfläche (204) abzudichten, wenn das mobile Endgerät auf die genannte Oberfläche gelegt wird, wodurch im mobilen Endgerät eine akustische ungerichtete Eigenschaft ermöglicht wird.

2. Mobiles Endgerät nach Anspruch 1,
**dadurch gekennzeichnet, dass**
die Dichtungsmittel (203) eine elastische Dichtung umfassen.

3. Mobiles Endgerät nach Anspruch 2,
**dadurch gekennzeichnet, dass**
die elastische Dichtung asymmetrisch ist, wobei eine Höhe h' eines ersten Teils der Dichtung kleiner ist als eine Höhe h eines zweiten Teils der Dichtung, wobei die Differenz Δ = h' - h dazu ausgebildet ist, unter Berücksichtigung eines Höhenwinkels (α) zwischen einer rückseitigen Oberfläche (102B) des Gehäuses (200) und der externen Oberfläche (204) zu dichten.

4. Mobiles Endgerät nach Anspruch 1,
**dadurch gekennzeichnet, dass**
zusätzlich zum Dichtungsmittel (303), das Gehäuse (200) weiter ein Stützelement (304) umfasst, um den Druck zwischen dem Dichtungsmittel (303) und der externen Oberfläche (204) zu erhöhen.

5. Mobiles Endgerät nach Anspruch 1,
**dadurch gekennzeichnet, dass**
das Dichtungsmittel (1001) weiter ein Befestigungsmittel zum Befestigen des Dichtungsrrtittels am Einlassloch (202) auf akustisch einwandfreie Weise umfasst.

6. Mobiles Endgerät nach Anspruch 5,
**dadurch gekennzeichnet, dass**
das mobile Endgerät Mittel (200) zum Aufbewahren des Dichtungsmittels (1001) aufweist.

7. Verfahren zum Herstellen eines mobilen Endgeräts mit Zweirichtungsmodus, wobei das Verfahren
**dadurch gekennzeichnet ist, dass**
es folgende Schritte umfasst:
- Montieren eines Mikrofons (110) in einem Gehäuse (200) des genannten mobilen Endgeräts, wobei das Gehäuse (200) mindestens eine erste und eine zweite Öffnung (101, 202) umfasst, von denen eine erste Öffnung (101) dazu ausgelegt ist, sich auf der Benutzerseite zu befinden, wenn das Endgerät als Handapparat benutzt wird, wobei die erste und die zweite Öffnung so akustische Leitungen zu beiden Seiten des Mikrofons (110) bilden; und
- Montieren des Gehäuses (200) mit Dichtungsmitteln (203), um die Löcher der zweiten Öffnung (202) zusammen mit einer externen Oberfläche (204) abzudichten, wenn das mobile Endgerät auf die genannte externe Oberfläche (204) gelegt wird, wodurch im mobilen Endgerät eine akustische ungerichtete Eigenschaft ermöglicht wird.

8. Verfahren nach Anspruch 7,
**dadurch gekennzeichnet, dass**
der Montageschritt das Montieren einer elastischen Dichtung umfasst.

9. Verfahren nach Anspruch 8,
**dadurch gekennzeichnet, dass**
die genannte elastische Dichtung asymmetrisch ist, wobei eine Höhe h' eines ersten Teils der Dichtung kleiner ist als eine Höhe h des zweiten Teils der Dichtung, wobei die Differenz Δ = h' - h dazu ausgebildet ist, unter Berücksichtigung des Höhenwinkels (α) zwischen der Unterseite (102B) des Gehäuses und der externen Oberfläche (204) zu dichten.

10. Verfahren nach Anspruch 7,
**dadurch gekennzeichnet, dass**
zusätzlich zum Dichtungsmittel (303), das Gehäuse weiter ein Stützelement (304) umfasst, um den Druck zwischen dem Dichtungsmittel (303) und der externen Oberfläche (204) zu erhöhen.

11. Verfahren nach Anspruch 7,
wobei das Dichtungsmittel (1001) weiter ein Befestigungsmittel zum Befestigen am Einlassloch (202) auf akustisch einwandfreie Weise umfasst.

12. Verfahren nach Anspruch 11,
wobei die Dichtungsmittel (1001) im Mobiltelefon aufbewahrt werden und wenn sie benutzt werden, in die Öffnung (202) platziert werden.

## Revendications

1. Terminal mobile à mode bidirectionnel comportant un microphone (110), ledit microphone (110) ayant été assemblé dans un boîtier (200) dudit terminal mobile,
**caractérisé en ce que**
- le boîtier (200) comporte au moins une première et une seconde ouverture (101, 202), la première ouverture (101) duquel se trouve côté utilisateur quand le terminal est utilisée comme un combiné, les première et seconde ouvertures (101, 202) formant des conduits acoustiques (ACF, ACB) jusqu'aux deux côtés du microphone (110) ; et
- le boîtier (200) comporte en outre des moyens de scellement (203, 303, 1001) pour sceller la seconde ouverture (202) avec une surface externe (204), quand le terminal mobile est placé sur ladite surface, validant ainsi dans le terminal mobile une caractéristique acoustique omnidirectionnelle.

2. Terminal mobile selon la revendication 1,
**caractérisé en ce que**
les moyens de scellement (203) comportent un joint élastique.

3. Terminal mobile selon la revendication 2,
**caractérisé en ce que**
le joint élastique est asymétrique, une hauteur h' d'une première partie du joint étant inférieure à une hauteur h d'une seconde partie du joint, la différence Δ = h' - h étant configurée pour effectuer un scellement entre une surface arrière (102B) du boîtier (200) et la surface externe (204) en tenant compte d'un angle d'élévation (α).

4. Terminal mobile selon la revendication 1,
**caractérisé en ce que**
en plus des moyens de scellement (303), le boîtier (200) comporte en outre un élément de support (304) pour augmenter la pression entre les moyens de scellement (303) et la surface externe (204).

5. Terminal mobile selon la revendication 1,
**caractérisé en ce que**
les moyens de scellement (1001) comportent en outre un moyen de fixation pour fixer les moyens de scellement à l'orifice d'entrée (202) d'une façon acoustiquement convenable.

6. Terminal mobile selon la revendication 5,
**caractérisé en ce que**
le terminal mobile comporte un moyen (200) pour ranger les moyens de scellement (1001).

7. Procédé de fabrication d'un terminal mobile à mode bidirectionnel, le procédé étant
**caractérisé en ce qu'**
il comporte les étapes suivantes :
- assemblage d'un microphone (110) dans un boîtier (200) dudit terminal mobile, dans lequel le boîtier (200) comporte au moins une première et une seconde ouverture (101, 202), la première ouverture (101) est conçue pour se trouver côté utilisateur quand le terminal est utilisé comme un combiné, les première et seconde ouvertures formant ainsi des conduits acoustiques jusqu'aux deux côtés du microphone (110) ; et
- assemblage du boîtier (200) avec des moyens de scellement (203) pour sceller les orifices de la seconde ouverture (202) avec une surface externe (204), quand le terminal mobile est placé sur ladite surface externe (204), validant ainsi dans le terminal mobile une caractéristique acoustique omnidirectionnelle.

8. Procédé selon la revendication 7,
**caractérisé en ce que**
l'étape d'assemblage comporte l'assemblage d'un joint élastique.

9. Procédé selon la revendication 8,
**caractérisé en ce que**
le joint élastique est asymétrique, une hauteur h' d'une première partie du joint étant inférieure à une hauteur h d'une seconde partie du joint, la différence Δ = h' - h étant configurée pour effectuer un scellement entre une surface arrière (102B) du boîtier et la surface externe (204) en tenant compte de l'angle d'élévation (α).

10. Procédé selon la revendication 7,
**caractérisé en ce que**
en plus des moyens de scellement (303), le boîtier comporte en outre un élément de support (304) pour augmenter la pression entre les moyens de scellement (303) et la surface externe (204).

11. Procédé selon la revendication 7,
dans lequel les moyens de scellement (1001) comportent en outre un moyen de fixation destiné à être fixé à l'orifice d'entrée (202) d'une façon acoustiquement convenable.

12. Procédé selon la revendication 11,
dans lequel les moyens de scellement (1001) sont rangés dans le téléphone mobile, et, lorsqu'ils sont utilisés, placés dans l'ouverture (202).
